# EUROPÄISCHE PATENTANMELDUNG

(11) **EP 3 029 807 A1**
(43) Veröffentlichungstag der Anmeldung: **08.06.2016**
(21) Anmeldenummer: 15003376.9
(22) Anmeldetag: 26.11.2015
(51) Int. Cl.: H02K 1/20, H02K 3/493, H02K 3/52

(54) **NUTVERSCHLUSS EINER ELEKTRISCHEN MASCHINE UND ELEKTRISCHE MASCHINE**

(30) Priorität: 01.12.2014 DE 102014017745
(71) Anmelder: Compact Dynamics GmbH, 82319 Starnberg (DE)
(72) Erfinder: Sontheim, Johann, 82346 Andechs-Machtlfing (DE); Oswald, Johann, 82438 Eschenlohe (DE); Spitzweck, Peter, 82266 Inning (DE)
(74) Vertreter: Schmidt, Steffen J.

(57) **Zusammenfassung**

Die Erfindung betrifft einen Nutverschluss 10, 110, 210, 310 für eine elektrische Maschine 20, 120, 220, die einen Stator 40, 120, 240, 340 mit wenigstens einer Statornut 16, 116, 216 umfasst, wobei in der Statornut 16, 116, 216 wenigstens eine elektrische Statorwicklung 14, 114, 214 aufgenommen ist. Der Nutverschluss 10, 110, 210, 310 ist dazu ausgebildet, die wenigstens eine Statornut 16, 116, 216 zumindest abschnittsweise zu verschließen. Dabei weist der Nutverschluss 10, 110, 210, 310 wenigstens einen Kühlkanal 12, 112, 212, 312 zum Kühlen der Statorwicklung 14, 114, 214 auf.

## Beschreibung

### Oberbegriff der Erfindung

Die vorliegende Erfindung betrifft einen Nutverschluss für eine elektrische Maschine, die einen Stator mit wenigstens einer Statornut umfasst, wobei in der Statornut wenigstens eine elektrische Statorwicklung aufgenommen ist und wobei der Nutverschluss die wenigstens eine Statornut zumindest abschnittsweise verschließt.

Nutverschlüsse elektrischer Maschinen dienen in erster Linie dem Schutz von in einer Statornut angeordneten elektrischen Leiterwicklungen. Dabei schützen Nutverschlüsse die Wicklungen zum einen vor mechanischen Beschädigungen und zum anderen vor einem ungewollten Herausrutschen aus der Statornut.

### Stand der Technik

Aus der DE 10 2005 030 877 A1 ist ein Nutverschluss für eine elektrische Maschine bekannt, der zum Verschluss einer Nutöffnung mit einer Leiteranordnung einsetzbar ist. Der Nutverschluss weist auf einer der Leiteranordnung zugewandten Seite eine verformbare Wölbung auf, die der Fixierung der Leiteranordnung dient. In einer spezifischen Ausführungsform kann der Nutverschluss zumindest teilweise aus magnetischem Material bestehen, um das Magnetfeld der elektrischen Maschine zu beeinflussen. Zudem kann der Nutverschluss vorzugsweise mit einem offenporigen Material ausgefüllt sein, um das Fixieren der Wicklungen zu verbessern.

Weiterer Stand der Technik findet sich in den Dokumenten DE 10 2005 013 836 A1, DE 10 2004 015 243 A1 und DE 10 2007 032 134 A1.

In den von den Nutverschlüssen geschützten Wicklungen kommt es in elektrischen Maschinen in Abhängigkeit der Stromdichte in den Wicklungen zu hohen Temperaturen. Diese führen zu ohmschen Verlusten und beschränken somit die Leistungsfähigkeit des Motors. Zudem wirken sich hohe Temperaturen negativ auf temperaturempfindliche Komponenten elektrischer Maschinen aus.

Um hohen Temperaturen und damit ohmschen Verlusten entgegenzuwirken, werden elektrische Maschinen höherer Leistung in der Regel aktiv gekühlt. Häufig werden dazu im Stand der Technik Statorpakete von elektrischen Maschinen an einen Kühlkreislauf angebunden, um die Verlustleistung des Stators abzuführen. Verluste des Rotors werden häufig über die Luft an ein Gehäuse der elektrischen Maschine abgegeben.

Aus der DE 199 39 598 A1 ist eine elektrische Maschine mit einem Statorteil und einem Rotorteil bekannt. Der Stator umfasst Statorzähne, die mit Spulenwicklungen versehen sind. Für Teilbereiche der Spulenwicklungen des Stators weist die elektrische Maschine eine Kühlung mit kanalisierter Kühlmittelströmung auf. Dazu können Strömungspassagen im Inneren der Statorzähne sowie im Inneren eines Basisbereichs des Stators ausgebildet sein.

EP 2 073 348 A1 beschreibt eine elektrische Maschine mit einem Rotor und einem Stator, die zwischen dem Rotor und dem Stator eine Leitung zum Kühlen der elektrischen Maschine aufweist.

Weiterer Stand der Technik ist aus der DE 10 2010 033 941 A1 bekannt. Diese beschreibt eine elektrische Maschine mit einem Rotor, einem Stator und einem von flüssigem Kühlmedium durchströmten Wärmetauscher.

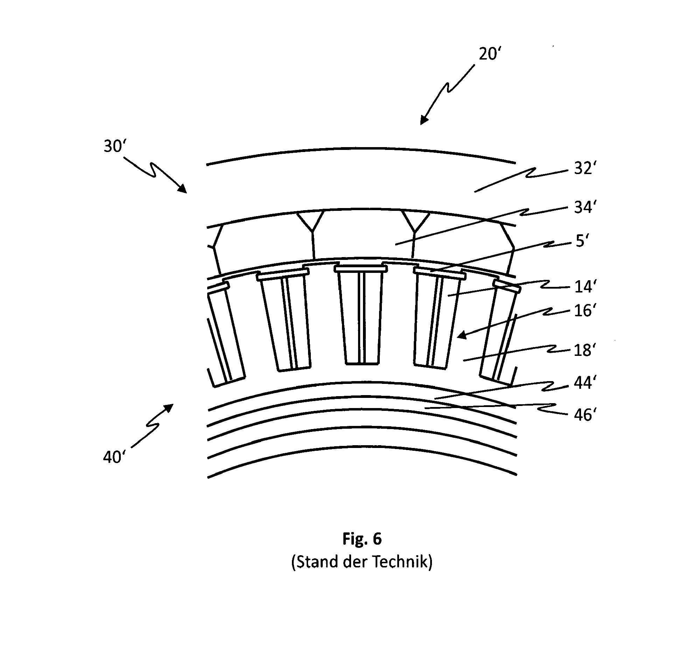

Beispielhaft ist in Fig. 6 eine aus der betrieblichen Praxis bekannte permanentmagneterregte elektrische Maschine dargestellt, die in Bezug auf Nutverschlüsse und eine Kühlung der Wicklungen Komponenten des Standes der Technik umfasst.

Die Bezugszeichen der Komponenten der elektrischen Maschine gemäß des Standes der Technik sind zur Abgrenzung gegenüber der Erfindung mit Apostrophen versehen. Abgesehen von den Apostrophen werden den Komponenten, die gemäß des Standes der Technik und der Erfindung im Wesentlichen dieselbe Ausführung und Funktion aufweisen, dieselben Bezugszeichen zugewiesen.

Fig. 6 zeigt demnach beispielhaft einen Nutverschluss 5' einer elektrischen Maschine 20', die einen Rotor 30' sowie einen Stator 40' umfasst. Der Nutverschluss 5' weist eine flächenförmige Ausbildung auf und dient dem Verschließen einer Statornut 16' des Stators 40'. In der Statornut 16' ist eine Leiteranordnung in Form von Wicklungen 14' aufgenommen. Die Wicklungen 14' sind um den Umfang eines Statorpakets 18' des Stators 40' angeordnet. Durch das Verschließen der Statornut 16' schützt der Nutverschluss 5' die in der entsprechenden Statornut 16' aufgenommenen Wicklungen 14' vor mechanischen Beschädigungen sowie vor einem ungewollten Herausrutschen aus der jeweiligen Statornut 16'.

Der Rotor 30' der elektrischen Maschine 20' umfasst einen Rotorträger 32', an dessen Innenumfang Permanentmagnete 34' in Richtung des Stators 40' angeordnet sind.

Zwischen dem Innenumfang der Permanentmagnete 34' des Rotors 30' und dem Außenumfang des Stators 40' ist eine Luftspalt vorgesehen. Dabei wird der Außenumfang des Stators 40' durch die Nutverschlüsse 5' und die radial nach außen orientierten Enden der Statorpakete 18' gebildet.

Zum Kühlen des Stators 40' sowie der daran angeordneten Wicklungen 14' ist an dem Innenumfang bzw. im Basisbereich des Stators 40' ein Wärmetauscher 44' vorgesehen. Der Wärmetauscher 44' umfasst einen Kühlkanal 46' zum Abführen von Wärme aus dem Wärmetauscher 44' und damit aus den Wicklungen 14'.

Wie in Fig. 6 gezeigt, weist der am Innenumfang des Stators 40' angeordnete Wärmetauscher 44' einen relativ großen Abstand zu radial außen liegenden Abschnitten der Wicklungen 14' auf. Aus diesem Grund muss in einer solchen Anordnung ein sehr hohes Temperaturgefälle zwischen den Wicklungen 14' und dem Wärmetauscher 44' vorgesehen werden, was einen relativ hohen Energiebedarf bedeutet. Zudem ist die Stromdichte insbesondere aufgrund der vom Wärmetauscher 44' am weitesten beabstandeten Wicklungsabschnitte, die nicht ausreichend gekühlt werden, in der gesamten Leiteranordnung begrenzt. Dies beschränkt daher die Leistungsfähigkeit einer entsprechend ausgebildeten elektrischen Maschine.

Aus der DE 2007735 A ist ferner eine Kühlvorrichtung bekannt, die an einem Rotor einer dynamoelektrischen Maschine angeordnet ist. Die Kühlvorrichtung weist Keile auf, die in Berührung mit Rotorwicklungen stehen. Dabei umfassen die Keile Kühlkanäle, die über Rohre in fluidischer Verbindung mit einem Kanal der Welle des Rotors stehen.

Des Weiteren offenbart die DE 10 2008 037 544 A1 einen Rotor für eine elektrische Maschine, der eine Kavität mit einer konturierten Ausnehmung aufweist. In der Kavität ist ein komplementärer Keil aufgenommen, der einen Kühlkanal umfasst.

Dokument GB 2505909 A bezieht sich auf eine Kühlkomponente für elektrische Maschinen, wobei die Kühlkomponente ein Rohr zum Transportieren von Kühlmittel umfasst. Die Kühlkomponente wird dabei an der vorgesehenen Betriebsposition durch Gießen oder Aushärten von Subkomponenten ausgebildet.

### Aufgabe der Erfindung

Insbesondere die Wicklungsköpfe von Wicklungen elektrischer Maschinen weisen eine geringe thermische Anbindung zum jeweiligen Statorpaket auf und sind von einer im Stator angeordneten Kühlung relativ weit beabstandet.

Daher ist die Aufgabe der vorliegenden Erfindung einen Nutverschluss der eingangs beschriebenen Art bereitzustellen, der gegenüber einer Kühlung der Statorpakete eine verbesserte thermische Anbindung an die Wicklungen einer elektrischen Maschine aufweist und die Wicklungen kühlt. Ferner liegt der Erfindung die Aufgabe zugrunde, eine mit einem derartigen Nutverschluss ausgestattete elektrische Maschine anzugeben.

### Lösung der Aufgabe

Die Aufgabe wird durch einen Nutverschluss mit den Merkmalen des Anspruchs 1 und eine elektrische Maschine mit den Merkmalen des Anspruchs 14 gelöst.

Bevorzugte Ausführungsformen werden aus den beigefügten Unteransprüchen 2 bis 13 und 15 ersichtlich.

Gemäß einem Aspekt kann der Nutverschluss wenigstens einen Kühlkanal zum Kühlen einer Statorwicklung aufweisen.

Durch die räumliche Nähe des Kühlkanals zu wenigstens einer angrenzenden Wicklung kann ein effektiver Abtransport von Wärme aus der entsprechenden wenigstens einen Wicklung über den wenigstens einen Kühlkanal des Nutverschlusses ausgeführt werden. Zudem kann der Nutverschluss die wenigstens eine angrenzende Wicklung zumindest abschnittsweise direkt Berühren, was sich zusätzlich positiv auf den Wärmeabtransport auswirkt.

Ein solcher Nutverschluss kann vorzugsweise in einer permanentmagneterregten elektrischen Maschine ausgeführt sein, die einen Rotor mit Permanentmagneten umfasst. Jedoch kann ein Nutverschluss gemäß der Erfindung auch in jeder anderen Art von elektrischen Maschinen vorgesehen werden, die zumindest eine Statornut umfasst.

Ein weiterer Vorteil eines Nutverschlusses gemäß der Erfindung liegt darin, dass neben den Wicklungen gleichzeitig auch die Statorpakete gekühlt werden können. Ferner können auch der Rotor bzw. im Falle einer permanentmagneterregten elektrischen Maschine die Magnete des Rotors mittels des Nutverschlusses gekühlt werden. Der Grund dafür ist die räumliche Nähe des Rotors zu dem Nutverschluss. Der Rotor und der Nutverschluss sind vorzugsweise lediglich durch einen Luftspalt getrennt, welcher im Betrieb hohe Luftspaltgeschwindigkeiten aufweisen kann und dadurch eine gute thermische Anbindung bietet. Aufgrund der zusätzlichen Kühlung von Magneten permanentmagneterregter elektrischer Maschinen können bevorzugt kostengünstige und hocheffiziente Magnete eingesetzt werden.

Besonders vorteilhaft ist, dass durch einen Nutverschluss gemäß der Erfindung das Temperaturniveau der Wicklungen reduziert und somit ohmsche Verluste verringert werden können. Daher kann die Stromdichte in den Wicklungen deutlich erhöht werden, was sich positiv auf die Leistung und Effizienz der elektrischen Maschine auswirken kann.

Gemäß einer Weiterbildung kann der wenigstens eine Kühlkanal des Nutverschlusses von einem Fluid durchströmt werden. Dieses Fluid kann beispielsweise Wasser oder ein sonstiges bekanntes Kühlmedium sein. Durch die Strömungsgeschwindigkeit des Fluides innerhalb des Kühlkanals und die Wärmekapazität des Fluides kann der Wärmeabtransport zusätzlich positiv beeinflusst werden.

In einer bevorzugten Ausführungsform kann der Nutverschluss wenigstens ein Verriegelungselement aufweisen, das seitlich an dem Nutverschluss angeordnet ist, um den Nutverschluss radial in der Statornut zu fixieren. Dadurch kann verhindert werden, dass der Nutverschluss im Betrieb aufgrund der wirkenden Kräfte in den Luftspalt wandert.

Dabei kann das wenigstens eine Verriegelungselement derart ausgebildet sein, dass eine einfache Montage des Nutverschlusses in der Statornut ermöglicht wird. Insbesondere kann der Nutverschluss dadurch in Bezug auf die Symmetrieachse des Stators und/oder in Bezug auf die Rotationsachse des Rotors in radialer Richtung in die Statornut einbringbar sein. Dies hat den Vorteil, dass der Nutverschluss beim Einbringen bzw. beim Positionieren nicht in axialer Richtung entlang den Wicklungen verschoben wird und diese dadurch beschädigt. Des Weiteren kann das wenigstens eine Verriegelungselement als separate Komponente, d.h. getrennt von dem Nutverschluss, ausgebildet sein.

Beispielsweise kann das wenigstens eine Verriegelungselement in Form einer Feder einer Feder-Nut-Verbindung ausgebildet sein, die in entsprechende Ausnehmungen in dem Nutverschluss sowie in den angrenzenden Statorpaketen eingreift.

Ferner kann das wenigstens eine Verriegelungselement in Form eines weichmagnetischen Formstücks ausgebildet sein, das beispielsweise in entsprechende Ausnehmungen in dem Nutverschluss sowie in den angrenzenden Statorpaketen eingreifen kann. Das wenigstens eine weichmagnetische Formstück kann dabei gleichzeitig als Flusssammler dienen und sich somit weiter positiv auf das Kühlen der Wicklungen bzw. des Stators auswirken. Ferner können je Nutverschluss beispielsweise vier weichmagnetische Formstücke zum Fixieren des Nutverschlusses vorgesehen sein. Die Formstücke können im Wesentlichen aus geblechten Stacks oder SMC-Material (Soft Magnetic Composite) hergestellt sein.

Gemäß einer weiteren Ausführungsform kann der Nutverschluss formschlüssig radial in der Statornut fixiert sein. Dazu können die an den Nutverschluss angrenzenden Statorpakete jeweils Hinterschneidungen an den Statorpaketspitzen aufweisen. Der Nutverschluss kann dabei komplementär zu den Hinterschneidungen der angrenzenden Statorpakete ausgebildet sein, sodass er im Betrieb formschlüssig in der Statornut fixiert ist. Ein Vorteil dieser Ausführungsform ist, dass eine solche Ausbildung eine großflächige thermische Anbindung des Nutverschlusses an die benachbarten Statorpakete ermöglicht, wodurch ein verbesserter Wärmeabtransport ermöglicht werden kann. Zudem kann bei dieser Ausführungsform eine optimierte Flussführung in den Statorzähnen erreicht werden. Ferner stellt die formschlüssige radiale Fixierung eine sichere Fixierung im Betrieb dar.

Gemäß einer Weiterbildung kann der Nutverschluss an ein Kühlsystem angebunden sein. Über das Kühlsystem kann der Nutverschluss vorzugsweise seriell oder parallel mit einem Wärmetauscher der elektrischen Maschine verbunden sein. Besonders vorteilhaft ist dabei, dass kein zusätzliches Kühlsystem für den Kühlkanal des Nutverschlusses ausgeführt werden muss und ein möglicherweise bereits vorhandenes Kühlsystem genutzt werden kann. Des Weiteren können die an den Nutverschluss angrenzenden Wicklungen durch eine Anbindung an einen Wärmetauscher der elektrischen Maschine von mehreren Seiten gekühlt werden. Vorzugsweise können die in einer Statornut angeordneten, an den Nutverschluss angrenzenden Wicklungen in dieser Ausführungsform von oben, unten und von zwei Seiten gekühlt werden.

Der wenigstens eine Kühlkanal des Nutverschlusses kann des Weiteren mäanderförmig mit wenigstens einem weiteren Kühlkanal eines weiteren Nutverschlusses verschaltet sein. Auf diese Weise kann beispielsweise die gesamte elektrische Maschine oder zumindest Teilsegmente der elektrischen Maschine miteinander verschaltet sein.

Weiter kann der Nutverschluss offene Enden aufweisen, die vorzugsweise einander gegenüberliegend angeordnet sind. Wenigstens ein offenes Ende kann mit einer Anschlussgeometrie versehen sein. Diese Anschlussgeometrie kann koaxial oder in einem beliebigen Winkel zu dem wenigstens einen Kühlkanal oder wenigstens einem Abschnitt des wenigstens einen Kühlkanals des Nutverschlusses ausgebildet sein. Die jeweilige Anschlussgeometrie kann ferner dazu dienen, den wenigstens einen Kühlkanal des Nutverschlusses mit dem Kühlsystem zu verbinden.

Die jeweilige Anschlussgeometrie kann bevorzugter Weise in Form eines Schlauchnippels ausgebildet sein. Ferner kann die Anschlussgeometrie aus Keramik, Kunststoff oder einem metallischem Werkstoff mit hohem elektrischem Widerstand bestehen.

Gemäß einer weiteren Ausführungsform kann der Nutverschluss direkt mit einem Fluidkanal, vorzugsweise einem Wasserkanal, verbunden sein, der nicht mit einem Kühlsystem und/oder Wärmetauscher des Stators verbunden ist. Eine derartige Ausführungsform stellt eine Alternative zu einer Ausführungsform dar, in der der Nutverschluss an ein vorhandenes Kühlsystem der elektrischen Maschine, vorzugsweise einen Wärmetauscher, angebunden ist. Für einen direkten Anschluss an einen Fluidkanal kann der Nutverschluss ferner eine Bohrung für einen Fluidanschluss, vorzugsweise einen Wasseranschluss, aufweisen. Bei dieser Ausführungsform kann der Nutverschluss in einer elektrischen Maschine vorgesehen sein, die abgesehen von dem Nutverschluss kein weiteres Kühlsystem aufweist. Jedoch kann diese Ausführungsform auch zusätzlich zu einem weiteren Kühlsystem einer elektrischen Maschine vorgesehen sein, ohne den wenigstens einen Kühlkanal des Nutverschlusses mit dem weiteren Kühlsystem, beispielsweise dem Wärmetauscher des Stators, zu verbinden.

Ferner kann der Nutverschluss offene Enden aufweisen, von denen wenigstens ein offenes Ende verschlossen ist. Vorzugsweise können die verschlossenen Enden mittels eines keramischen Plättchens verschlossen werden.

Sowohl die Anbindung einer Anschlussgeometrie an den Nutverschluss als auch das Verschließen offener Enden des Nutverschlusses, vorzugsweise mittels keramischer Plättchen, kann mit Hilfe von Keramikkleber oder einem konventionellen Klebesystem ausgeführt werden. Auch können Keramik- und/oder Kunststoffkomponenten metallisiert werden, um eine Lötverbindung zu ermöglichen. Ferner können entsprechende Verbindungen auch durch Reibschweißen, Laserschweißen und/oder Ultraschallschweißen erzeugt werden.

In einer bevorzugten Ausführungsform kann der Nutverschluss im Wesentlichen ein nicht ferromagnetisches Material, ein elektrisch nicht leitfähiges Material und/oder ein Material mit hoher Wärmeleitfähigkeit aufweisen. Ferner kann der Nutverschluss im Wesentlichen eine technische Keramik, beispielsweise AlSiC oder AlN, einen Hochtemperatur-Thermoplast oder einen Duroplast mit hoher Wärmeleitfähigkeit aufweisen. Ein Material mit einer hohen Wärmeleitfähigkeit kann beispielsweise einen Wärmeleitwert von wenigstens 180W/mK aufweisen. Eine solche Ausführungsform erlaubt dem Nutverschluss, die daran angrenzenden Wicklungen ohne Isolation direkt zu kontaktieren, wodurch der Wärmeabtransport aus den Wicklungen in den Kühlkanal des Nutverschlusses positiv beeinflusst wird. Insbesondere kann somit die Entstehung von Wirbelstromverlusten vermindert werden.

Bevorzugter Weise kann der Nutverschluss ein prismatisches Profil aufweisen. Ferner kann der Nutverschluss, abgesehen von dem Kühlkanal, aus Vollmaterial gebildet sein.

Die vorliegende Erfindung betrifft ferner eine elektrische Maschine mit einem Stator und einem Rotor, wobei der Stator Statorpakete mit wenigstens einer Statorwicklung sowie entsprechende Statornuten umfasst. Eine Statornut nimmt dabei zumindest abschnittsweise wenigstens eine Wicklung auf. Zudem weist wenigstens eine Statornut der elektrischen Maschine einen Nutverschluss nach einer der vorhergehend beschriebenen Ausführungsformen auf.

In einer bevorzugten Ausführungsform kann die elektrische Maschine eine permanentmagneterregte elektrische Maschine sein. Ferner kann diese einen Rotor mit Permanentmagneten umfassen.

Vorzugsweise kann ein Luftspalt zwischen dem Rotor bzw. den Permanentmagneten des Rotors und dem Stator vorgesehen sein.

Gemäß einer Weiterbildung kann zwischen dem Nutverschluss und den an den Nutverschluss angrenzenden Komponenten der elektrischen Maschine eine Wärmeleitpaste, ein Tränklack, ein Kleber oder ein Verguss vorgesehen sein. Die Wärmeleitpaste, der Tränklack oder der Verguss können in dieser Ausführungsform zur Optimierung des Wärmeübergangs zwischen dem Nutverschluss und den angrenzenden Komponenten der elektrischen Maschine dienen. Zu diesem Zweck weist die jeweils verwendete Wärmeleitpaste, der Tränklack und der Verguss eine gute Wärmeleitfähigkeit auf.

Es versteht sich, dass der Gegenstand der Erfindung nicht auf die zuvor beschriebenen Ausführungsformen beschränkt ist. Die beschriebenen Ausführungen und Merkmale können vom Fachmann beliebig kombiniert werden, ohne dabei vom Gegenstand der Erfindung abzuweichen.

### Kurze Beschreibung der Figuren

Fig. 1 zeigt schematisch einen Ausschnitt eines Querschnitts einer elektrischen Maschine mit einem Nutverschluss gemäß einer ersten Ausführungsform.
Fig. 2 zeigt schematisch einen Ausschnitt eines Längsschnitts der elektrischen Maschine gemäß Fig. 1.
Fig. 3 zeigt schematisch einen Ausschnitt eines Querschnitts einer elektrischen Maschine mit einem Nutverschluss gemäß einer zweiten Ausführungsform.
Fig. 4 zeigt schematisch einen Ausschnitt eines Querschnitts einer elektrischen Maschine mit einem Nutverschluss gemäß einer dritten Ausführungsform.
Fig. 5 zeigt schematisch einen Ausschnitt einer Draufsicht eines Stators einer elektrischen Maschine mit einem Nutverschluss gemäß einer vierten Ausführungsform.
Fig. 6 zeigt schematisch einen Ausschnitt eines Querschnitts einer elektrischen Maschine gemäß des bekannten Standes der Technik.

### Detaillierte Beschreibung der Figuren

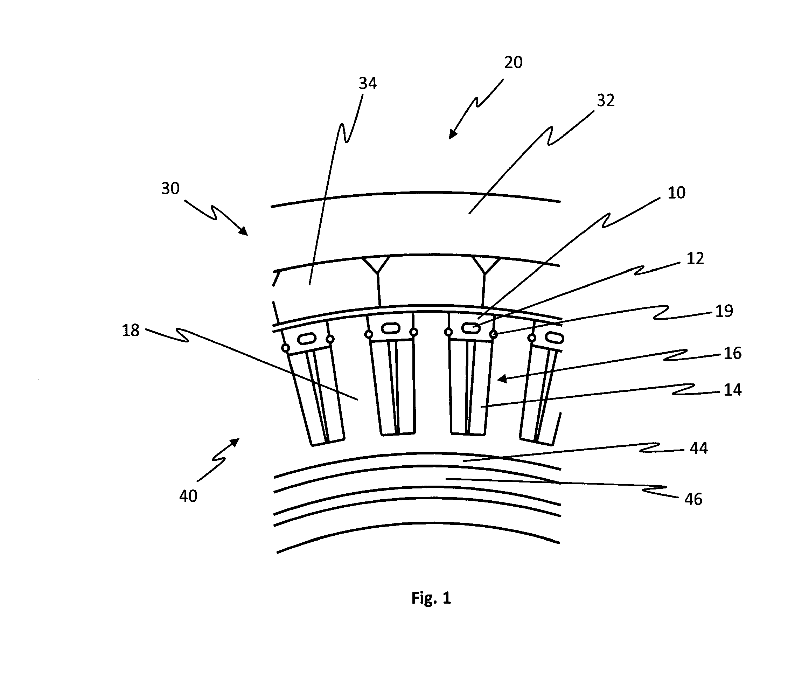

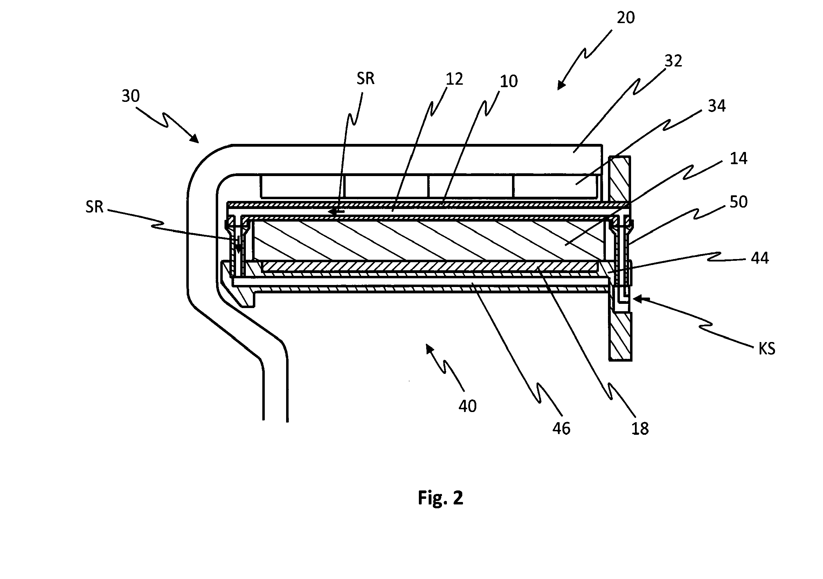

Komponenten, die in Fig. 1 und Fig. 2 mehrfach ausgebildet sind und dieselbe Funktion und Ausführung aufweisen, werden im Folgenden jeweils exemplarisch anhand einer Komponente beschrieben. Die zugehörigen Beschreibungen und Ausführungen können demnach auch auf die weiteren, gleichartigen Komponenten übertragen werden.

Fig. 1 zeigt einen Nutverschluss 10 einer elektrischen Maschine 20 gemäß der Erfindung, der einen Fluidkanal 12 zum Kühlen von Statorwicklungen 14 aufweist. Der Fluidkanal 12 ist im Wesentlichen in der Mitte des Nutverschlusses 10 angeordnet und weist einen kurvenförmigen Querschnitt auf.

Der Nutverschluss 10 ist Bestandteil einer elektrischen Maschine 20, die einen Rotor 30 und einen Stator 40 umfasst. Der Rotor 30 ist in Form eines Außenläufers ausgebildet.

Der Nutverschluss 10 weist einen prismatischen Querschnitt auf und ist bis auf den Fluidkanal 12 aus Vollmaterial ausgebildet. Der Nutverschluss 10 ist in einem radial außen liegenden Bereich einer Statornut 16 der elektrischen Maschine 20 angeordnet. Der Nutverschluss 10 verschließt die Statornut 16 und schützt damit die Statorwicklungen 14 vor mechanischen Beschädigungen sowie vor einem ungewollten Herausrutschen aus der Statornut 16. Die Wicklungen 14 sind um den Umfang eines Statorpakets 18 des Stators 40 der elektrischen Maschine 20 angeordnet und zumindest abschnittsweise in der Statornut 16 aufgenommen. Der Nutverschluss 10 ist derart in der Statornut 16 angeordnet, dass das obere Ende des Nutverschlusses 10 zusammen mit den radial äußeren Enden der Statorpakete 18 im Wesentlichen eine gemeinsame Außenoberfläche des Stators 40 bildet. Das untere Ende des Nutverschlusses 10 liegt im Inneren der Statornut 16 und berührt die angrenzenden Wicklungen 14.

Der Nutverschluss ist im radial außen liegenden Bereich der Statornut 16 durch jeweils ein Verriegelungselement 19 auf beiden Seiten radial in den angrenzenden Statorpaketen 18 fixiert. Das jeweilige Verriegelungselement 19 greift dazu abschnittsweise in den Nutverschluss 10 sowie in das angrenzende Statorpaket 18 ein. Das jeweilige Verriegelungselement 19 ist in Form einer Feder ausgebildet und greift jeweils in eine entsprechende Nut der angrenzenden Statorpakete ein.

Der Rotor 30 der elektrischen Maschine 20 umfasst einen Rotorträger 32, an dessen Innenumfang radial nach innen erstreckende Permanentmagnete 34 angeordnet sind. Zwischen dem Innenumfang der Permanentmagnete 34 des Rotors 30 und dem Außenumfang des Stators 40 ist ein Luftspalt vorgesehen. Dabei wird der Außenumfang des Stators 40 durch die Oberseiten der Nutverschlüsse 10 der elektrischen Maschine 20 sowie die radial außen liegenden Enden der Statorpakete 18 gebildet.

Im Bereich des Innenumfangs bzw. in der Basis des Stators 40 ist ein Wärmetauscher 44 angeordnet. Der Wärmetauscher 44 umfasst einen Kühlkanal 46 und ist mit den Nutverschlüssen 10 fluidisch verbunden (in Fig. 1 nicht gezeigt, siehe Fig. 2). Der Wärmetauscher 44 dient zusätzlich zu den Nutverschlüssen 10 der Kühlung des Stators 40.

Damit werden die in Fig. 1 gezeigten Wicklungen 14 von mehreren Seiten gekühlt. Insbesondere sind in dieser Ausführung Kühlkanäle im Bereich des oberen und des unteren Endes der Wicklungen 14 angeordnet.

Fig. 2 zeigt einen Längsschnitt der in Fig. 1 dargestellten Ausführungsform gemäß der Erfindung.

Im Folgenden wird lediglich auf Merkmale eingegangen, die in Fig. 1 nicht gezeigt sind. Merkmale, die in Fig. 1 und in Fig. 2 dargestellt sind, werden daher nachfolgend nicht erneut beschrieben.

Fig. 2 zeigt die Anbindung des Kühlkanals 12 des Nutverschlusses 10 an den Kühlkanal 46 des Wärmetauschers 44 über Anschlussgeometrien 50. Eine Anschlussgeometrie 50 ist jeweils auf einer Seite (links oder rechts) der Wicklungen 14 bzw. der Statornut 16 angeordnet. Die jeweilige Anschlussgeometrie 50 ist auf den beiden Seiten der Wicklung 14 im Wesentlichen rechtwinklig zur Längsachse der Kühlkanäle 12 und 46 ausgebildet, wobei der Kühlkanal 12 des Nutverschlusses 10 und der Kühlkanal 46 des Wärmetauschers 44 im Wesentlichen parallel zueinander angeordnet sind. Zudem ist die Anschlussgeometrie 50 jeweils mit dem oberen Ende mit dem Kühlkanal 12 des Nutverschlusses 10 und mit dem unteren Ende mit dem Kühlkanal 46 des Wärmetauschers 44 verbunden. Die Anschlussgeometrie 50 ist dabei jeweils mit einem Abschnitt an den beiden Enden entlang der Längsachse der Statornut 16 verbunden, wobei die beiden Abschnitte der Statornut 16 im Wesentlichen rechtwinklig in Richtung des Wärmetauschers 44 abgewinkelt sind.

Damit werden die Wicklungen 14 von vier Seiten gekühlt. Der Nutverschluss 10 kühlt die Wicklungen 14 von oben (im Bereich des Außenumfangs des Stators 40), während der Wärmetauscher 44 die Wicklungen 14 von unten (im Bereich des Innenumfangs des Stators 40) über die Basis des Statorpakets 18 kühlt. Zudem kühlt jeweils eine Anschlussgeometrie 50 die Wicklungen 14 von einer Seite der Statornut 16 (links oder rechts) und stellt somit einen geschlossenes Kühlsystem zwischen dem Nutverschluss 10 und dem Wärmetauscher 44 her.

Die Strömungsrichtung innerhalb des Kühlsystems bzw. des Kühlkreislaufs ist in Fig. 2 durch die Pfeile SR gekennzeichnet.

Zudem ist eine Kühlmittelzuführung bzw. ein Anschluss des Kühlkreislaufs an ein Kühlsystem des Stators 40 durch den Pfeil KS beispielhaft angedeutet. Der Anschluss KS ist jedoch nicht im Detail dargestellt. Über den Anschluss KS an das Kühlsystem des Stators 40 bzw. über die Kühlmittelzuführung KS wird den Kühlkanälen 12 und 46 gekühltes Kühlmittel zugeführt und die Strömungsgeschwindigkeit im Kühlkreislauf bestimmt.

Bei den im Folgenden beschriebenen weiteren Ausführungsformen werden gleichartige bzw. gleichwirkende Komponenten mit den gleichen Bezugszeichen wie bei der vorstehend beschriebenen ersten Ausführungsform versehen, jedoch werden die Bezugszeichen je nach Ausführungsform mit einer vorangestellten Ziffer, beginnend an Eins, versehen. Die Komponenten, die in den weiteren Ausführungsformen nicht erneut beschrieben sind, ähneln in ihrer Ausbildung und Funktion den entsprechenden Komponenten der ersten Ausführungsform gemäß den Figuren 1 und 2.

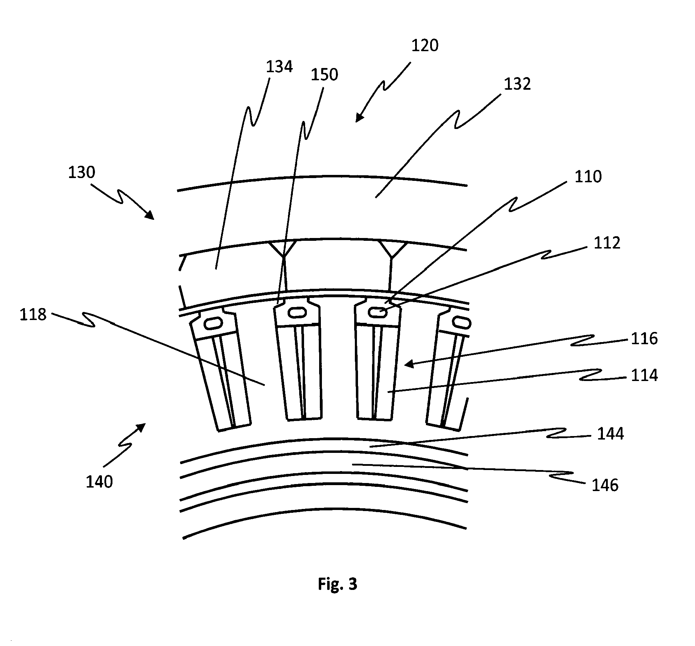

Der Aufbau der in Fig. 3 gezeigten zweiten Ausführungsform ähnelt dem Aufbau der ersten Ausführungsform gemäß den Fig. 1 und 2. Daher wird im Folgenden nur auf die Unterschiede zwischen den beiden Ausführungsformen eingegangen.

Im Unterschied zu dem in Fig. 1 gezeigten Aufbau, ist der in Fig. 3 gezeigte Nutverschluss 110 gemäß der zweiten Ausführungsform nicht durch ein Verriegelungselement radial in der Statornut 116 fixiert. Die radiale Fixierung ist hier durch Formschluss zwischen dem Nutverschluss 110 und den angrenzenden Statorpaketen 118 realisiert. Dazu weisen die angrenzenden Statorpakete 118 jeweils Hinterschneidungen 150 an den Statorpaketspitzen auf. Die Hinterschneidungen 150 sind an einem dem Rotor 130 zugewandten Ende des jeweiligen Statorpakets 118 angeordnet. Dabei ist je Statorpaket 118 jeweils eine Hinterschneidung 150 in Richtung der beiden angrenzenden Nutverschlüsse 110 ausgebildet. Die Nutverschlüsse 110 sind komplementär zu den Statorpaketen 118 bzw. den Hinterschneidungen 150 ausgebildet, sodass sich eine formschlüssige Verbindung zwischen den Nutverschlüssen 110 und den Statorpaketen 118 ergibt. Dadurch können die Nutverschlüsse 110 ohne Verriegelungselement radial in der jeweiligen Statornut 116 fixiert werden.

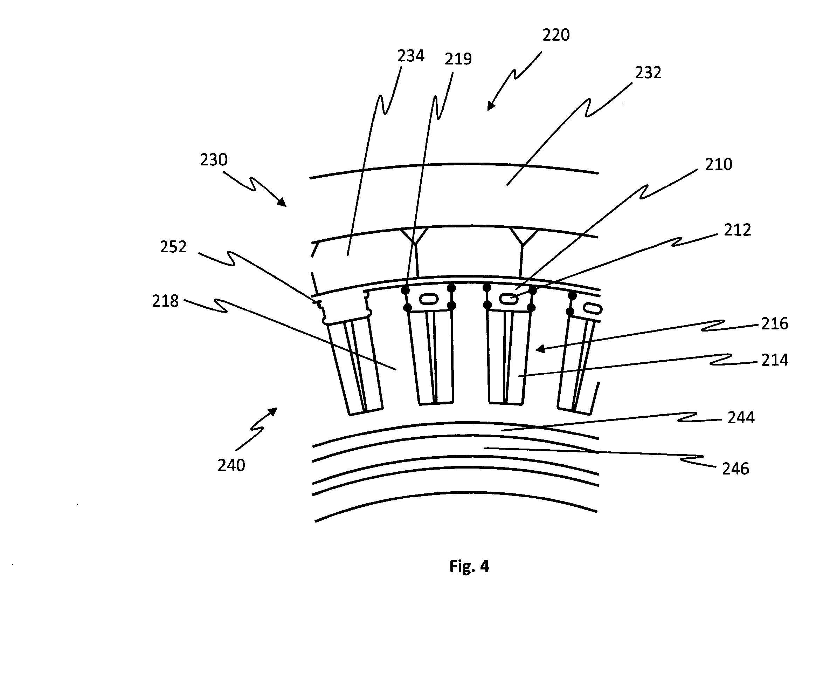

Der Aufbau der in Fig. 4 gezeigten dritten Ausführungsform ähnelt dem Aufbau der ersten Ausführungsform gemäß den Fig. 1 und 2. Daher wird im Folgenden nur auf die Unterschiede zwischen den beiden Ausführungsformen eingegangen.

Im Unterschied zur ersten Ausführungsform, weist der Nutverschluss 210 der dritten Ausführungsform jeweils zwei Verriegelungselemente 219 auf beiden Seiten des Nutverschlusses 210 auf. Diese insgesamt vier Verriegelungselemente 219 sind dabei in Form von weichmagnetischen Formstücken aus geblechten Stacks oder SMC-Material ausgebildet. Die weichmagnetischen Formstücke greifen jeweils in Ausnehmungen (nicht gezeigt) des Nutverschlusses 210 und Ausnehmungen 252 des angrenzenden Statorpakets 218 ein. Die weichmagnetischen Formstücke fixieren den Nutverschluss 210 damit radial in der Statornut 216 und dienen zugleich als Flusssammler.

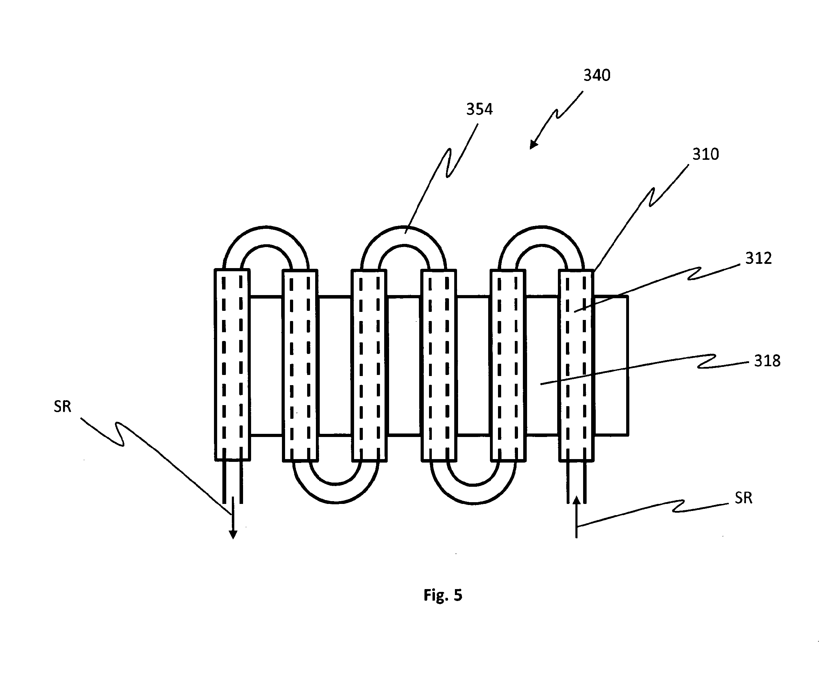

Fig. 5 zeigt einen Ausschnitt einer Draufsicht auf eine Statoranordnung 340 mit Nutverschlüssen 310 gemäß einer vierten Ausführungsform. Die Nutverschlüsse 310 der vierten Ausführungsform ähneln den Nutverschlüssen 10 der ersten Ausführungsform, jedoch zeigt Fig. 5 beispielhaft eine mäanderförmige Verschaltung der Nutverschlüsse 310.

Die Kühlkanäle 312 der Nutverschlüsse 310 sind jeweils über ein Verbindungsstück 354 an einem Ende mit einem benachbarten Kühlkanal 312 eines Nutverschlusses 310 verschaltet. Dabei sind die Kühlkanäle 312 an unterschiedlichen Enden jeweils mit einem Kühlkanal 312 eines anderen benachbarten Nutverschlusses verbunden, wodurch die mäanderförmige Verschaltung realisiert ist.

Durch diese Verschaltung bilden die Kühlkanäle 310 einen gemeinsamen Kühlkreislauf. Die Pfeile SR deuten wiederrum die Strömungsrichtung des Fluids in den Kühlkanälen 10 an.

Die dargestellte Verschaltung kann alternativ oder zusätzlich zu einer Anbindung der Kühlkanäle 310 an einen weiteren Kühlkreislauf, beispielsweise den Kühlkreislauf eines Wärmetauschers des Stators, vorgesehen sein.

## Patentansprüche

1. Nutverschluss (10, 110, 210, 310) für eine elektrische Maschine (20, 120, 220), die einen Stator (40, 120, 240, 340) mit wenigstens einer Statornut (16, 116, 216) umfasst, wobei in der Statornut (16, 116, 216) wenigstens eine elektrische Statorwicklung (14, 114, 214) aufgenommen ist, und wobei der Nutverschluss (10, 110, 210, 310) die wenigstens eine Statornut (16, 116, 216) zumindest abschnittsweise verschließt, **dadurch gekennzeichnet, dass** der Nutverschluss (10, 110, 210, 310) wenigstens einen Kühlkanal (12, 112, 212, 312) zum Kühlen der Statorwicklung (14, 114, 214) aufweist.

2. Nutverschluss (10, 110, 210, 310) nach Anspruch 1, **dadurch gekennzeichnet, dass** der wenigstens eine Kühlkanal (12, 112, 212, 312) von einem Fluid durchströmt wird.

3. Nutverschluss (10, 210) nach einem der vorhergehenden Ansprüche, **dadurch gekennzeichnet, dass** der Nutverschluss (10, 210) wenigstens ein Verriegelungselement (19, 219) aufweist, das seitlich an dem Nutverschluss (10, 210) angeordnet ist, um den Nutverschluss (10, 210) radial in der Statornut (16, 216) zu fixieren.

4. Nutverschluss (10, 210) nach Anspruch 3, **dadurch gekennzeichnet, dass** das Verriegelungselement (19, 219) in Form einer Feder einer Feder-Nut-Verbindung und/oder in Form eines weichmagnetischen Formstücks ausgebildet ist.

5. Nutverschluss (10, 210) nach Anspruch 3 oder 4, **dadurch gekennzeichnet, dass** das wenigstens eine Verriegelungselement (19, 219) als separate Komponente ausgebildet ist.

6. Nutverschluss (110) nach einem der vorhergehenden Ansprüche, **dadurch gekennzeichnet, dass** der Nutverschluss formschlüssig radial in der Statornut (116) fixiert ist.

7. Nutverschluss (10, 310) nach einem der vorhergehenden Ansprüche, **dadurch gekennzeichnet, dass** der wenigstens eine Kühlkanal (12, 312) des Nutverschlusses (10, 310) an ein Kühlsystem angebunden ist und vorzugsweise über das Kühlsystem seriell oder parallel mit einem Wärmetauscher (44) der elektrischen Maschine (20) verbunden ist.

8. Nutverschluss (310) nach einem der vorhergehenden Ansprüche, **dadurch gekennzeichnet, dass** der wenigstens eine Kühlkanal (312) des Nutverschlusses (310) mäanderförmig mit wenigstens einem weiteren Kühlkanal eines weiteren Nutverschlusses verschaltet ist.

9. Nutverschluss (10) nach einem der vorhergehenden Ansprüche, **dadurch gekennzeichnet, dass** der Nutverschluss (10) offene Enden aufweist, wobei wenigstens ein offenes Ende mit einer Anschlussgeometrie (50) versehen ist, die vorzugsweise koaxial zu einem Abschnitt des wenigstens einen Kühlkanals (12) ausgebildet ist.

10. Nutverschluss nach einem der Ansprüche 1 bis 6, **dadurch gekennzeichnet, dass** der Nutverschluss direkt mit einem Fluidkanal, vorzugsweise einem Wasserkanal, verbunden ist und/oder eine Bohrung für einen Fluidanschluss, vorzugsweise einen Wasseranschluss, aufweist.

11. Nutverschluss nach Anspruch 10, **dadurch gekennzeichnet, dass** der Nutverschluss offene Enden aufweist, wobei wenigstens ein offenes Ende verschlossen ist, vorzugsweise mittels eines keramischen Plättchens.

12. Nutverschluss (10, 110, 210, 310) nach einem der vorhergehenden Ansprüche, **dadurch gekennzeichnet, dass** der Nutverschluss (10, 110, 210, 310) im Wesentlichen ein nicht ferromagnetisches Material, ein elektrisch nicht leitfähiges Material und/oder ein Material mit hoher Wärmeleitfähigkeit aufweist, vorzugsweise eine technische Keramik, einen Hochtemperatur-Thermoplast und/oder einen Duroplast mit hoher Wärmeleitfähigkeit.

13. Nutverschluss (10, 110, 210, 310) nach einem der vorhergehenden Ansprüche, **dadurch gekennzeichnet, dass** der Nutverschluss (10, 110, 210, 310) in radialer Richtung in die wenigstens eine Statornut (16, 116, 216) einbringbar ist.

14. Elektrische Maschine (20, 120, 220) mit einem Stator (40, 140, 240) und einem Rotor (30, 130, 230), wobei der Stator (40, 140, 240) Statorpakete (18, 118, 218) mit wenigstens einer Statorwicklung (14, 114, 214) sowie entsprechende Statornuten (16, 116, 216) umfasst, und wobei wenigstens eine Statornut (16, 116, 216) einen Nutverschluss (10, 110, 210, 310) nach einem der Ansprüche 1 bis 13 aufweist.

15. Elektrische Maschine (20, 120, 220) nach Anspruch 14, **dadurch gekennzeichnet, dass** zwischen dem Nutverschluss (10, 110, 210, 310) und an den Nutverschluss angrenzenden Komponenten eine Wärmeleitpaste, ein Tränklack, ein Kleber oder ein Verguss vorgesehen ist, zur Optimierung des Wärmeübergangs zwischen dem Nutverschluss (10, 110, 210, 310) und den angrenzenden Komponenten.
